(19) **Europäisches Patentamt / European Patent Office / Office européen des brevets**

(11) **EP 2 966 474 A1**

(12) **EUROPÄISCHE PATENTANMELDUNG**

(43) Veröffentlichungstag:
**13.01.2016 Patentblatt 2016/02**

(51) Int Cl.:
**G01S 17/10** (2006.01)    **G01S 17/88** (2006.01)
**G06T 7/00** (2006.01)    G01S 7/48 (2006.01)
G01S 7/486 (2006.01)    G01S 7/487 (2006.01)

(21) Anmeldenummer: **15173991.9**

(22) Anmeldetag: **26.06.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **11.07.2014 DE 102014109755**

(71) Anmelder: **SICK AG**
**79183 Waldkirch/Breisgau (DE)**

(72) Erfinder:
• **Nübling, Achim**
  **79312 Emmendingen (DE)**
• **Harter, Thorsten**
  **77799 Ortenberg (DE)**
• **Ehrler, Carsten**
  **79111 Freiburg (DE)**

(74) Vertreter: **Manitz, Finsterwald & Partner GbR**
**Martin-Greif-Strasse 1**
**80336 München (DE)**

(54) **VERFAHREN ZUR VERMESSUNG EINES OBJEKTS**

(57) Es wird ein Verfahren zur Vermessung eines Objekts mittels eines Laserscanners beschrieben, wobei der Laserscanner zumindest eine erste Art von Messwerten und eine zweite Art von Messwerten erfasst. Dabei wird ein Ergebniswert berechnet, indem Messwerte der ersten Art mit Messwerten der zweiten Art gewichtet werden.

28     30     32

* = 

Fig. 3C

**Beschreibung**

Die vorliegende Erfindung betrifft ein Verfahren zur Vermessung eines Objekts mittels eines Laserscanners, wobei der Laserscanner zumindest eine erste Art von Messwerten und eine zweite Art von Messwerten erfasst.

Laserscanner werden in einer Vielzahl von Anwendungen zur Vermessung von Objekten verwendet, beispielsweise um die Anwesenheit, die Lage, die Länge, die Breite und/oder die Höhe oder den Abstand eines Objekts zu ermitteln. Insbesondere kommen Laserscanner dabei in der Automatisierungstechnik zum Einsatz, um z.B. auf Förderbändern oder Schalensortern transportierte Pakete oder Briefe zu vermessen, wobei beispielsweise anhand deren Höhe eine Sortierung der Pakete oder Briefe vorgenommen wird.

Üblicherweise werden z.B. Kantentrefferfilter oder Medianfilter verwendet, um die von dem Laserscanner erfassten Messwerte zu filtern. Nach der Filterung kann beispielsweise die Höhe eines Objekts aus den gefilterten Messwerten des Laserscanners berechnet werden.

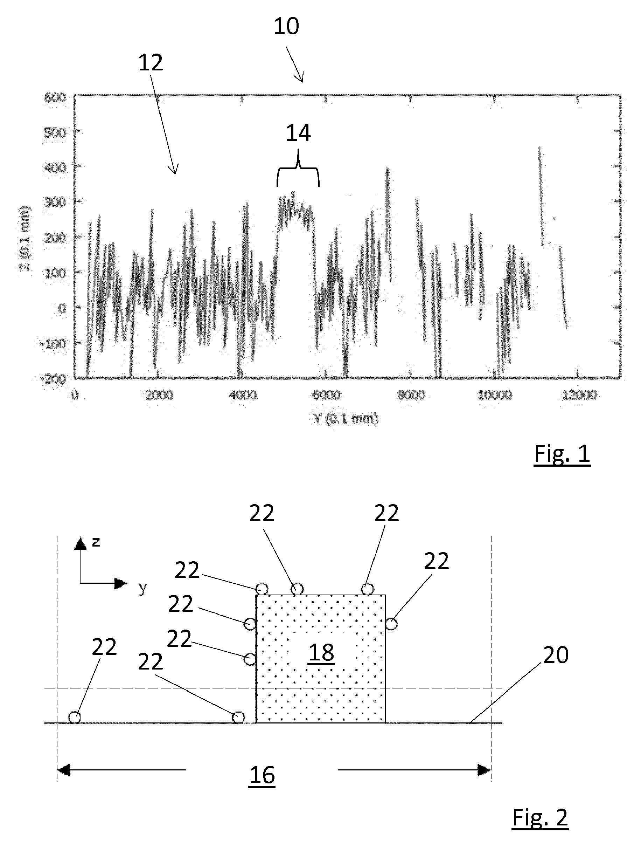

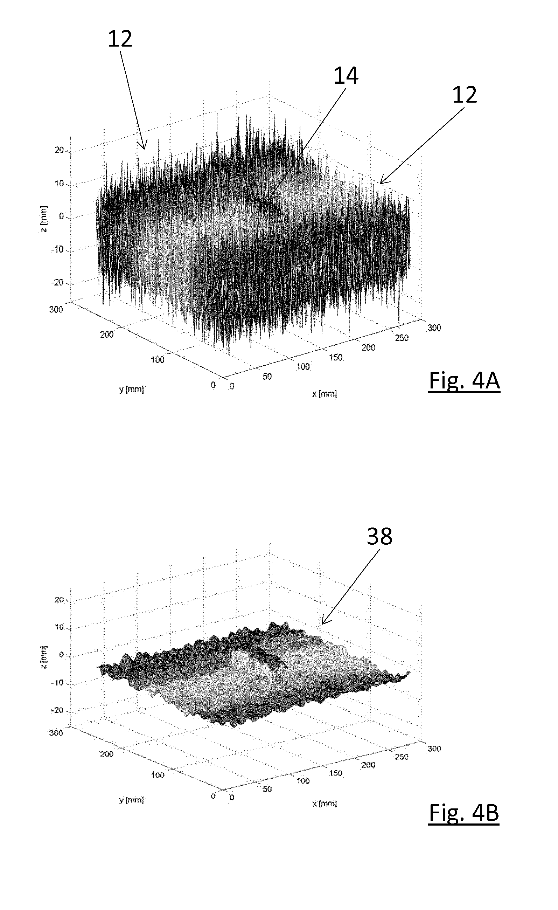

Allerdings unterliegen die Messwerte eines Laserscanners immer einem gewissen Rauschen und einer gewissen Messungenauigkeit (siehe Fig. 1 und Fig. 4A), so dass insbesondere flache Objekte nur mit großen Schwierigkeiten detektiert bzw. vermessen werden können. Dies ist insbesondere der Fall, wenn das statistische Rauschen der Messwerte des Laserscanners größer ist als die minimal zu vermessende Objekthöhe. Dann können flache Objekte nicht zuverlässig und damit eichrelevant vermessen werden, woran auch die oben beschriebene Filterung nichts ändert.

Der Erfindung liegt daher die Aufgabe zugrunde, ein Verfahren zur Vermessung eines Objekts mittels eines Laserscanners anzugeben, welches eine zuverlässige und stabile Vermessung auch von flachen Objekten gestattet.

Erfindungsgemäß wird diese Aufgabe durch das Verfahren gemäß Anspruch 1 und insbesondere dadurch gelöst, dass ein Ergebniswert berechnet wird, indem Messwerte der ersten Art mit Messwerten der zweiten Art gewichtet werden.

Der Erfindung liegt dabei die Erkenntnis zugrunde, dass die Messwerte der ersten Art verbessert werden können, wenn diese mit den Messwerten einer zweiten Art verrechnet und damit gewichtet werden. Der bei der Gewichtung entstehende Ergebniswert ist ein Wert der ersten Art, d.h. der Ergebniswert weist dieselbe Einheit (z.B. mm) auf, wie die Messwerte der ersten Art. Bei dem Ergebniswert handelt es sich somit um einen verbesserten Messwert der ersten Art, durch welchen beispielsweise die Höhe eines Objekts mit verbesserter Genauigkeit und/oder vermindertem Rauschen angegeben werden kann.

Der Laserscanner umfasst in der Regel einen Lichtsender zur Aussendung von Lichtsignalen, eine Lichtablenkeinheit (gebildet zum Beispiel durch einen rotierenden Spiegel) zur periodischen Ablenkung der vom Lichtsender ausgesandten Lichtsignale in einen Erfassungsbereich und einen Lichtempfänger zum Empfang von von einem sich im Erfassungsbereich befindlichen Objekt zurückgeworfenem Licht. Mittels des Lichtsignals kann ein linienförmiger (eindimensionaler) oder rechteckiger (zweidimensionaler) Bereich mittels des Laserscanners abgetastet werden. Der abgetastete Bereich kann dabei in verschiedene Messpunkte, sogenannte Pixel, unterteilt werden, wobei für jeden Messpunkt zumindest ein Messwert der ersten Art und ein Messwert der zweiten Art erfasst wird.

Auch kann mittels des Lichtsignals ein linienförmiger Bereich abgetastet werden, wobei das zu vermessende Objekt z.B. von einem Förderband z.B. senkrecht zu der abgetasteten Linie bewegt wird, um das Objekt als Ganzes zu vermessen.

Nach der Erfassung der Messwerte der ersten und zweiten Art werden die Messwerte der ersten Art mit den Messwerten der zweiten Art gewichtet, um den Ergebniswert zu berechnen. Der Ergebniswert kann jeweils genau einem Messpunkt oder auch mehreren Messpunkten zugeordnet sein.

Aufgrund der Gewichtung der Messwerte der ersten Art mit den Messwerten der zweiten Art werden im Vergleich zu den Messwerten der ersten Art stark verbesserte Ergebniswerte erzeugt.

Vorteilhafte Ausführungsformen der Erfindung sind in der Beschreibung, den Zeichnungen sowie den Unteransprüchen beschrieben.

Bevorzugt geben die Messwerte der ersten Art eine Distanz zu dem Laserscanner an. Die Distanz wird von dem Laserscanner z.B. aus einer Laufzeitmessung eines Lichtpulses zu dem jeweiligen Messpunkt oder mittels einer laufzeitbedingten Phasenverschiebung eines modulierten Lichtsignals berechnet. Die Zuordnung der gemessenen Distanz zu einem Messpunkt erfolgt dabei mittels des Winkels, unter welchem der Laserscanner das jeweilige Lichtsignal ausgesandt hat. Mit einer bekannten Distanz z.B. des Förderbandes, d.h. des Hintergrunds des Objekts, kann dann beispielsweise die Höhe des Objekts ermittelt werden. Dementsprechend können die Messwerte der ersten Art auch Höhenmesswerte sein.

Weiterhin bevorzugt geben die Messwerte der zweiten Art eine Remission an. Die Remission beschreibt, welcher Anteil eines Lichtsignals von einem bestimmten Messpunkt zu dem Laserscanner zurückgeworfen wird. Dieser Anteil kann beispielsweise aufgrund der Oberflächenbeschaffenheit des Objekts und/oder dessen Farbe variieren.

Durch die Vermessung des Objekts mit Distanzwerten und Remissionswerten wird das Objekt multimodal vermessen. Dabei können eine Vielzahl von Messpunkten für das Objekt erzeugt werden, die beispielsweise für inhomogene Objekte unterschiedliche Remissionswerte aufweisen. Auch die Distanzwerte können für verschiedene Messpunkte des Objekts unterschiedlich ausfallen, da diese durch die tatsächliche Distanz des jeweiligen Messpunkts zum Laserscanner und die Ungenauigkeit des Laserscanners schwanken.

Aufgrund des Umstands, dass das Objekt üblicherweise ein Remissionsverhalten besitzt, welches von dem Remissionsverhalten des Hintergrunds (wie z.B. eines Förderbands) unterschiedlich ist, kann durch Gewichtung der Distanzwerte mit den Remissionswerten der Ergebniswert, welcher wiederum ein Distanzwert ist, gegenüber dem gemessenen Distanzwert verbessert werden. Durch die in die Ergebniswerte eingehende Gewichtung wird die Genauigkeit des Laserscanners erhöht, wodurch auch insbesondere besonders flache und dünne Objekte deutlich von dem Hintergrund unterscheidbar sind und damit vermessen werden können.

Gemäß einer vorteilhaften Ausführungsform der Erfindung werden die Messwerte der ersten Art und/oder die Messwerte der zweiten Art in Abhängigkeit des jeweiligen Abstands zu einer Position des Ergebniswerts gewichtet. Auf diese Weise können Messwerte der ersten Art und/oder der zweiten Art stärker in den Ergebniswert einfließen, je näher sie dem Messpunkt sind, dem der Ergebniswert zugeordnet ist.

Bevorzugt werden zur Berechnung des Ergebniswerts nur Messwerte herangezogen, deren Positionen maximal einen vorbestimmten Abstand zu dem Ergebniswert aufweisen. Der Ergebniswert wird also nur auf der Grundlage einer vorbestimmten Anzahl von Messpunkten mit Messwerten aus einer Nachbarschaft eines dem Ergebniswert zugeordneten Messpunkts berechnet. Beispielsweise kann die Nachbarschaft eine Größe von 3 x 3, 9 x 9 oder 11 x 11 Messpunkten (d.h. Pixeln) aufweisen, wobei die Position des Ergebniswerts jeweils im Zentrum der Nachbarschaft liegt. Der Berechnungsaufwand zur Berechnung des Ergebniswerts kann durch Anpassung der Größe der Nachbarschaft an die zur Verfügung stehende Rechenleistung unter Berücksichtigung der erforderlichen Berechnungsgeschwindigkeit und Genauigkeit angepasst werden.

Gemäß einer weiteren vorteilhaften Ausführungsform wird der Ergebniswert nach Art eines bilateralen Filters unter Verwendung der Formel

$$F[d_i] = \frac{1}{W_i} \sum_{j \in S} G_{\sigma_d}\left(\| p_i - p_j \|\right) G_{\sigma_r}(| r_i - r_j |) d_j$$

berechnet, wobei

$F[d_i]$   der Ergebniswert,

$d_i$   der Messwert erster Art an der Position des Ergebniswerts,

$W_i$   die Summe der Filterkoeffizienten,

$S$   die Nachbarschaft um die Position des Ergebniswert,

$G_{\sigma_d}$   die Gauß-Funktion mit Standardabweichung $\sigma_d$,

$p_i$   die Position des Ergebniswerts,

$p_j$   die Position eines Pixels in der Nachbarschaft der Position des Ergebniswerts,

$G_{\sigma_r}$   die Gauß-Funktion mit Standardabweichung $\sigma_r$,

$r_i$   der Messwert zweiter Art an der Position des Ergebniswerts,

$r_j$   ein Messwert zweiter Art in der Nachbarschaft der Position des Ergebniswerts und

$d_j$   ein Messwert erster Art in der Nachbarschaft der Position des Ergebniswerts

sind.

Gemäß der Formel wird zur Berechnung des dem Messwert erster Art $d_i$ zugeordneten Ergebniswerts $F[d_i]$ eine Iteration über sämtliche Messpunkte der Nachbarschaft $S$ durchgeführt, wobei mittels des Terms $\| p_i - p_j \|$ der normierte räumliche Abstand des jeweiligen Messpunkts in der Nachbarschaft der Position des Ergebniswerts dargestellt wird. Der normierte räumliche Abstand dient als Eingangswert der Gauß-Funktion bzw. Gauß-Verteilung mit Standardabweichung $\sigma_d$ ($G_{\sigma_d}$).

Mittels des Terms $|r_i - r_j|$ wird der Betrag der Differenz der Remissionswerte an dem jeweiligen Messpunkt und der Remission an der Position des Messpunkts, der dem Ergebniswert zugeordnet ist, angegeben. Dieser Wert dient als Eingangswert der Gauß-Funktion bzw. Gauß-Verteilung mit Standardabweichung $\sigma_r$ ($G_{\sigma_r}$).

Die Ergebnisse der Gauß-Funktionen mit Standardabweichung $\sigma_d$ und $\sigma_r$ werden abschließend mit dem jeweiligen Messwert der ersten Art ($d_j$), also dem gemessenen Distanzmesswert in der räumlichen Nachbarschaft der Position des Ergebniswerts multipliziert. Der so erhaltene Wert wird für sämtliche Messpunkte in der Nachbarschaft der Position des Ergebniswerts bestimmt, wobei diese Werte aufsummiert werden und durch die Summe der Filterkoeffizienten geteilt werden ($W_i$), um den Ergebniswert $F[d_i]$ zu erhalten.

Üblicherweise wird für die Berechnung mehrerer Ergebniswerte jeweils eine gleich große Nachbarschaft S, beispielsweise eine 11 x 11 Nachbarschaft, verwendet. In diesem Fall sind die Werte des Terms $G_{\sigma_d}$ ($\|p_i - p_j\|$) konstant, da die Abstände der jeweiligen Messwerte zu der dem Ergebniswert zugeordneten räumlichen Position konstant sind. Diese Werte müssen daher nicht wiederholt berechnet werden, sondern können einmalig erzeugt und beispielsweise in einer Nachschlagetabelle gespeichert werden.

Der Term $G\sigma_r$ ($|r_i - r_j|$) ist hingegen von den jeweiligen Messwerten zweiter Art abhängig, d.h. beispielsweise von den gemessenen Remissionswerten, welche je nach vermessenem Objekt schwanken können. Deshalb liefert dieser Term für unterschiedliche Messwerte zweiter Art unterschiedliche Ergebnisse. Dies bedeutet, dass der Term für die Remission für jeden Ergebniswert neu berechnet wird, wodurch der Ergebniswert auf einer adaptiven Filterung beruht.

Alternativ kann für zumindest eine der Gauß-Funktionen $G\sigma_d$, $G\sigma_r$ auch eine Laplace-Verteilung bzw. Laplace-Funktion verwendet werden. Ebenfalls möglich ist die Kombination einer Gauß- und einer Laplace-Funktion. Alternativ können auch weitere Wahrscheinlichkeitsverteilungen anstelle der Gauß- oder Laplace-Funktion verwendet werden.

Insbesondere durch die Variation der Parameter $\sigma_d$, $\sigma_r$ der jeweiligen Gauß-Funktion $G\sigma_d$, $G\sigma_r$ kann die Filterung der Messwerte an die jeweilige Anwendung angepasst werden, um optimierte Ergebniswerte zu erhalten.

Gemäß einer weiteren vorteilhaften Ausführungsform wird der Ergebniswert auch anhand von weiteren Messwerten berechnet, welche z.B. einen Farbwert und/oder einen Grauwert und/oder einen Infrarotwert angeben. Durch die Einbeziehung zusätzlicher Messwerte kann der Ergebniswert weiter verbessert werden.

Zu diesem Zweck kann der Laserscanner ausgebildet sein, einen Farbwert und/oder einen Grauwert und/oder einen Infrarotwert zu erfassen. Die Verwendung des Farbwerts und/oder des Grauwerts und/oder des Infrarotwerts kann auch anstelle des Remissionswerts erfolgen. Insbesondere können zusätzliche Messwerte auf die gleiche Weise wie die Remissionswerte in die oben erläuterte Formel integriert werden, wobei insbesondere eine weitere Gauß-Funktion für die Grauwerte mit dem jeweiligen Messwert erster Art multipliziert wird.

Beispielsweise kann die Berechnung des Ergebniswerts bei zusätzlicher Einbeziehung eines Grauwerts erfolgen, indem der jeweilige Messwert der ersten Art bei Bildung der Summe über sämtliche Elemente der Nachbarschaft S zusätzlich mit einer Gauß-Funktion mit einer Standardabweichung, welcher der Standardabweichung der Grauwerte entspricht, multipliziert wird. Der Eingangswert für die Gauß-funktion ist der Betrag der Differenz zwischen dem Grauwert an der Position des Ergebniswerts und dem Grauwert an der jeweiligen Position eines Messpunkts in der Nachbarschaft.

Gemäß einer weiteren vorteilhaften Ausführungsform wird das Verfahren iterativ ausgeführt, wobei der Messwert der ersten Art an der Position des Ergebniswerts durch den Ergebniswert ersetzt wird. Der Ergebniswert der vorhergehenden Iteration dient also als Eingangswert bzw. Messwert der ersten Art für die nächste Iteration. Auf diese Weise kann die Genauigkeit des Ergebniswerts weiter erhöht werden. Insbesondere können z.B. 2, 4 oder 8 Iterationen durchgeführt werden.

Besonders bevorzugt wird das Verfahren für jeden Messpunkt des Laserscanners wiederholt. Dies bedeutet, dass für jeden Messpunkt ein Ergebniswert berechnet wird, wobei aufgrund der berechneten Ergebniswerte die Vermessung des Objekts deutlich genauer erfolgen kann.

Gemäß einer weiteren vorteilhaften Ausführungsform wird der Ergebniswert mittels eines FPGAs (Field Programmable Gate Array) oder einer GPU (Graphics Processing Unit) berechnet. Insbesondere eine GPU ist für die Anwendungen von Filterfunktionen besonders optimiert und ermöglicht somit eine schnelle Berechnung des Ergebniswerts.

Die Erfindung umfasst weiterhin einen Laserscanner zur Vermessung eines Objekts in einem Erfassungsbereich, mit einem Lichtsender zur Aussendung von Lichtsignalen, einer Lichtablenkeinheit zur periodischen Ablenkung der vom Lichtsender ausgesandten Lichtsignale in den Erfassungsbereich, einem Lichtempfänger zum Empfang von von dem sich im Erfassungsbereich befindlichen Objekt zurückgeworfenen Licht, wobei der Laserscanner ausgebildet ist, zumindest eine erste Art von Messwerten und eine zweite Art von Messwerten des Objekts zu erfassen und wobei der Laserscanner eine Auswerteeinheit umfasst, die ausgebildet ist, einen Ergebniswert zu berechnen, indem Messwerte der ersten Art mit Messwerten der zweiten Art gewichtet werden.

Die Auswerteeinheit kann dabei ein FPGA, eine GPU oder ein mit dem Laserscanner verbundener Steuerrechner sein.

Die bezüglich des erfindungsgemäßen Verfahrens getroffenen Aussagen gelten entsprechend auch für den erfindungsgemäßen Laserscanner.

Nachfolgend wird die Erfindung rein beispielhaft anhand einer möglichen Ausführungsform unter Bezugnahme auf die beigefügten Zeichnungen beschrieben. Es zeigen:

Fig. 1    ein Messsignal eines Laserscanners des Stands der Technik;

Fig. 2    ein Objekt mit Messpunkten zur Vermessung des Objekts;

Fig. 3A   auf der linken Seite gemessene Höhen- und auf der rechten Seite Remissionswerte in einer 11 x 11 Nachbarschaft;

Fig. 3B   ein Filter gemäß der Funktion $G_{\sigma_d}$ ($\|p_i - p_j\|$) (linke Seite der Figur) sowie ein Filter gemäß der Funktion $G_{\sigma_r}$ ($|r_i - r_j|$) (rechte Seite der Figur);

Fig. 3C   die Multiplikation der in Fig. 3B gezeigten Filter sowie deren Ergebnis;

Fig. 3D   die Anwendung des in Fig. 3C berechneten Filters auf die in Fig. 3A gezeigten Höhenwerte sowie die daraus resultierenden Ergebniswerte;

Fig. 4A   ungefilterte Messwerte eines Laserscanners gemäß dem Stand der Technik; und

Fig. 4B   die Messwerte von Fig. 4A, welche mit dem für den jeweiligen Messpunkt erzeugten Filter von Fig. 3C gefiltert wurden.

Fig. 1 zeigt eine Messung 10 mit in Richtung der Ordinate angetragenen Höhenmesswerten 12 einer Messung eines (nicht gezeigten) Laserscanners. Die Höhenmesswerte 12 erstrecken sich über einen länglichen Bereich von 1200 mm, welcher auf der Abszisse angetragen ist. Die Höhenmesswerte 12 sind aus von dem Laserscanner aufgenommenen Distanzmesswerten (aus der Laserpulslaufzeit) berechnet, wobei der Abstand des Laserscanners zu einem Hintergrund eines Objekts bekannt ist. Der Hintergrund ist z.B. ein Förderband 20 (Fig. 2).

Im Abszissenbereich zwischen etwa 400 und 600 mm liegen Höhenmesswerte 14 eines Objekts 18 (Fig. 2) vor. Die übrigen Höhenmesswerte 12 stammen nicht von dem Objekt 18 sondern von dem Förderband 20 und sollten im Idealfall den Messwert Null zeigen. Die dargestellten realen Höhenmesswerte 12 weisen jedoch ein statistisches Rauschen auf, das zu ungenaueren Höhenmesswerten 12 führt.

Fig. 2 zeigt einen Erfassungsbereich 16 eines Laserscanners, in welchem sich ein Objekt 18, beispielsweise ein Postpaket, auf einem Förderband 20 befindet, wobei das Förderband 20 den Hintergrund zu dem Objekt 18 bildet. In Fig. 2 sind mehrere Messpunkte 22 dargestellt, mit welchen das Objekt 18 vermessen wird.

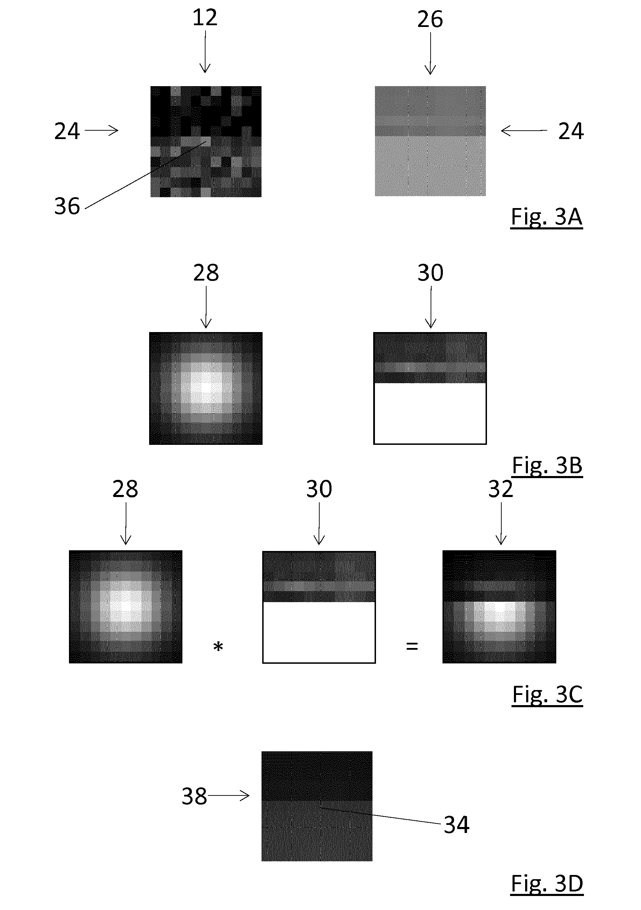

Ebenso wie Fig. 1 zeigt auch die linke Grafik von Fig. 3A Höhenmesswerte 12 eines Laserscanners gemäß dem Stand der Technik, wobei eine Nachbarschaft 24 mit 11 x 11 Pixeln dargestellt ist, innerhalb welcher eine Kante des Objekts 18 verläuft. Jeder Pixel repräsentiert einen Messpunkt 22. Dabei zeigen hellere Pixel eine größere gemessene Höhe bezüglich des Hintergrunds an.

Auf der rechten Seite von Fig. 3A ist nochmals die Nachbarschaft 24 dargestellt, hier sind von dem Laserscanner aufgenommenen Remissionsmesswerte 26 gezeigt. Bei den Remissionsmesswerten 26 zeigen hellere Pixel eine stärkere Remission an.

In Fig. 3B ist links die Funktion $G_{\sigma_d}$ ($\|p_i - p_j\|$) und rechts die Funktion $G_{\sigma_r}$ ($|r_i - r_j|$) als Filter der Größe 11 x 11 dargestellt. Der linke Filter stellt dabei einen konstanten Filteranteil 28 dar, der einer Gauß-Funktion folgt und dementsprechend mittig die höchsten Werte aufweist. Entsprechend der Darstellung der Höhenmesswerte 12 und der Remissionsmesswerte 26 zeigen hellere Pixel höhere Werte an.

Der rechte Filter stellt einen adaptiven Filteranteil 30 dar, bei welchem jeder der 121 (11 x 11) Filterpunkte ermittelt wird, indem der jeweilige Remissionsmesswerts 26 von dem mittigen Remissionsmesswert 26 subtrahiert wird und das Ergebnis der Subtraktion als Eingangswert einer Gauß-Funktion dient. Dementsprechend zeigt der untere Teil des adaptiven Filteranteils 30 nur weiße Pixel, da die Remissionsmesswerte 26 in diesem Bereich alle identisch sind und die Subtraktion dieser Remissionsmesswerte 26 von dem mittigen Remissionsmesswert 26 somit Null ergibt. Der Wert der Gauß-Funktion für den Wert Null ist maximal, folglich sind diese Werte mit weißen Pixeln dargestellt.

Fig. 3C zeigt ein aus Multiplikation des konstanten Filteranteils 28 und des adaptiven Filteranteils 30 resultierendes Filter 32.

Bei der Durchführung des Verfahrens wird das resultierende Filter 32 auf die Nachbarschaft 24 angewendet, um einen Ergebniswert 34 für den zentralen Höhenmesswert 36 (Fig. 3A) zu erhalten. Um für sämtliche Höhenmesswerte 12 der Nachbarschaft 24 einen Ergebniswert zu erhalten, wird das Verfahren auf jeden Höhenmesswert 12 der Nachbarschaft 24 angewendet, wobei sich die Nachbarschaft 24 für jeden Höhenmesswert 12 verschiebt und auch für jeden Höhenmesswert 12 ein neuer adaptiver Filteranteil 30 berechnet wird.

Nach Anwendung des Verfahrens auf sämtliche Höhenmesswerte 12 der Nachbarschaft 24, d.h. nach 121-maliger Durchführung des Verfahrens, ergibt das in Fig. 3D dargestellte Endergebnis 38. In dem Endergebnis 38 ist deutlich der Höhenunterschied zwischen dem im unteren Teil befindlichen Objekt und dem oberen Teil befindlichen Hintergrund aufgrund des Helligkeitsunterschieds zu erkennen. Das Rauschen der Messwerte hat deutlich abgenommen.

Eine weitere Veranschaulichung der Funktionsweise des Verfahrens ist in den Fig. 4A und 4B dargestellt. Fig. 4A zeigt verrauschte Höhenmesswerte 12 eines Laserscanners, wobei auch Höhenmesswerte 12 eines Objekts 18 erfasst werden. Die Darstellung der Höhenmesswerte 12 erfolgt dabei entsprechend Fig. 1 mit dem Unterschied, dass ein zweidimensionales Feld von Höhenmesswerten 12 dargestellt ist. Die zu den Höhenmesswerten 12 von Fig. 4A zugehörigen Remissionsmesswerte 26 sind nicht gezeigt.

Nach Durchführung des Verfahrens für sämtliche Höhenmesswerte 12, d.h. nach Berechnung eines Ergebniswerts 34 für jeden Höhenmesswert 12 ergibt sich das in Fig. 4B gezeigte Endergebnis 38 in welchem die Position und Höhe des Objekts deutlich zu erkennen ist.

Im Betrieb des Laserscanners kann das Verfahren auf sämtliche Höhenmesswerte 12 angewandt werden, die von dem Laserscanner erfasst werden. Der Laserscanner kann dann anstelle der Höhenmesswerte 12 für jeden Höhenmesswert 12 einen Ergebniswert 34 ausgeben, aufgrund dessen beispielsweise eine Prozesssteuerung einer Industrieanlage erfolgen kann.

Bezugszeichenliste

| | |
|---|---|
| 10 | Messung |
| 12 | Höhenmesswertsignal |
| 14 | Höhenmesswerte im Bereich eines Objekts |
| 16 | Erfassungsbereich |
| 18 | Objekt |
| 20 | Förderband |
| 22 | Messpunkt |
| 24 | Nachbarschaft |
| 26 | Remissionsmesswerte |
| 28 | konstanter Filteranteil |
| 30 | adaptiver Filteranteil |
| 32 | resultierender Filter |
| 34 | Ergebniswert |
| 36 | zentraler Höhenmesswert |
| 38 | Endergebnis |

**Patentansprüche**

1. Verfahren zur Vermessung eines Objekts (18) mittels eines Laserscanners, wobei der Laserscanner zumindest eine erste Art von Messwerten (12) und eine zweite Art von Messwerten (26) erfasst, wobei ein Ergebniswert (34) berechnet wird, indem Messwerte der ersten Art (12) mit Messwerten der zweiten Art (26) gewichtet werden.

2. Verfahren nach Anspruch 1,
   **dadurch gekennzeichnet, dass**
   die Messwerte der ersten Art (12) eine Distanz zu dem Laserscanner angeben.

3. Verfahren nach Anspruch 1 oder 2,
   **dadurch gekennzeichnet, dass**
   die Messwerte der zweiten Art (26) eine Remission angeben.

4. Verfahren nach einem der vorstehenden Ansprüche,
   **dadurch gekennzeichnet, dass**
   die Messwerte der ersten Art (12) und/oder die Messwerte der zweiten Art (26) in Abhängigkeit des jeweiligen Abstands zu einer Position des Ergebniswerts (34) gewichtet werden.

**5.** Verfahren nach einem der vorstehenden Ansprüche,
**dadurch gekennzeichnet, dass**
zur Berechnung des Ergebniswerts (34) nur Messwerte (12, 26) herangezogen werden, deren Positionen maximal einen vorbestimmten Abstand zu der Position des Ergebniswerts aufweisen.

**6.** Verfahren nach einem der vorstehenden Ansprüche,
**dadurch gekennzeichnet, dass**
der Ergebniswert (34) nach Art eines bilateralen Filters unter Verwendung der Formel

$$\mathrm{F}[d_i] = \frac{1}{W_i}\sum_{j\in S} G_{\sigma_d}\left(\| \, p_i - p_j \, \|\right) G_{\sigma_r}(| \, r_i - \, r_j \, |)d_j$$

berechnet wird, wobei

F[d$_i$] der Ergebniswert (34),
d$_i$ der Messwert erster Art (12) an der Position des Ergebniswerts,
W$_i$ die Summe der Filterkoeffizienten,
S die Nachbarschaft (24) um die Position des Ergebniswert (34),
$G_{\sigma_d}$ die Gauß-Funktion mit Standardabweichung σ$_d$,
p$_i$ die Position des Ergebniswerts,
p$_j$ die Position eines Pixels in der Nachbarschaft der Position des Ergebniswerts (34),
$G_{\sigma_r}$ die Gauß-Funktion mit Standardabweichung σ$_r$,
r$_i$ der Messwert zweiter Art (26) an der Position des Ergebniswerts (34),
r$_j$ ein Messwert zweiter Art (26) in der Nachbarschaft (24) der Position des Ergebniswerts (34) und
d$_j$ ein Messwert erster Art (12) in der Nachbarschaft der Position des Ergebniswerts (34)

sind.

**7.** Verfahren nach einem der vorstehenden Ansprüche,
**dadurch gekennzeichnet, dass**
der Ergebniswert (34) auch anhand von weiteren Messwerten berechnet wird, welche einen Farbwert und/oder einen Grauwert und/oder einen Infrarotwert angeben.

**8.** Verfahren nach einem der vorstehenden Ansprüche,
**dadurch gekennzeichnet, dass**
das Verfahren iterativ ausgeführt wird, wobei der Messwert der ersten Art (12) an der Position des Ergebniswerts (d$_i$) durch den Ergebniswert F[d$_i$] (34) ersetzt wird.

**9.** Verfahren nach einem der vorstehenden Ansprüche,
**dadurch gekennzeichnet , dass**
das Verfahren für jeden Messpunkt (22) des Laserscanners wiederholt wird.

**10.** Verfahren nach einem der vorstehenden Ansprüche,
**dadurch gekennzeichnet , dass**
der Ergebniswert (34) mittels eines FPGAs (Field Programmable Gate Array) oder einer GPU (Graphics Processing Unit) berechnet wird.

**11.** Laserscanner zur Vermessung eines Objekts (18) in einem Erfassungsbereich (16), mit einem Lichtsender zur Aussendung von Lichtsignalen, einer Lichtablenkeinheit zur Ablenkung der vom Lichtsender ausgesandten Lichtsignale in den Erfassungsbereich, einem Lichtempfänger zum Empfang von von dem sich im Erfassungsbereich (16) befindlichen Objekt (18) zurückgeworfenem Licht, wobei der Laserscanner ausgebildet ist, zumindest eine erste Art von Messwerten (12) und eine zweite Art von Messwerten (26) des Objekts (18) zu erfassen und wobei der Laserscanner eine Auswerteeinheit umfasst, die ausgebildet ist, einen Ergebniswert (34) zu berechnen indem Messwerte der ersten Art (12) mit Messwerten der zweiten Art (26) gewichtet werden.

Fig. 1

Fig. 2

12

24 →

36

26

← 24

<u>Fig. 3A</u>

28

30

<u>Fig. 3B</u>

28

30

32

*

=

<u>Fig. 3C</u>

38 →

34

<u>Fig. 3D</u>

Fig. 4A

Fig. 4B

Europäisches
Patentamt

European
Patent Office

Office européen
des brevets

**EUROPÄISCHER RECHERCHENBERICHT**

Nummer der Anmeldung

EP 15 17 3991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | OISHI S ET AL: "Denoising of range images using a trilateral filter and belief propagation", INTELLIGENT ROBOTS AND SYSTEMS (IROS), 2011 IEEE/RSJ INTERNATIONAL CONFERENCE ON, IEEE, 25. September 2011 (2011-09-25), Seiten 2020-2027, XP032200640, DOI: 10.1109/IROS.2011.6094443 ISBN: 978-1-61284-454-1 * Absatz [0003] - Absatz [0005] *<br>----- | 1-11 | INV. G01S17/10 G01S17/88 G06T7/00 ADD. G01S7/48 G01S7/486 G01S7/487 |
| X<br><br>A | US 2009/048705 A1 (NUBLING ACHIM [DE] ET AL) 19. Februar 2009 (2009-02-19) * Absätze [0018], [0028], [0044] *<br>----- | 1-3,11<br><br>4-10 | |
| X<br><br>A | US 2007/237382 A1 (NUEBLING ACHIM [DE] ET AL) 11. Oktober 2007 (2007-10-11) * Absätze [0026], [0040] *<br>----- | 1-3,11<br><br>4-10 | |
| A | CRABB R ET AL: "Real-time foreground segmentation via range and color imaging", COMPUTER VISION AND PATTERN RECOGNITION WORKSHOPS, 2008. CVPR WORKSHOPS 2008. IEEE COMPUTER SOCIETY CONFERENCE ON, IEEE, PISCATAWAY, NJ, USA, 23. Juni 2008 (2008-06-23), Seiten 1-5, XP031285726, ISBN: 978-1-4244-2339-2 * Absatz [0001] - Absatz [0003] *<br>----- | 1-11 | RECHERCHIERTE SACHGEBIETE (IPC)<br><br>G01S G06T |

-/--

Der vorliegende Recherchenbericht wurde für alle Patentansprüche erstellt

| Recherchenort | Abschlußdatum der Recherche | Prüfer |
|---|---|---|
| München | 16. November 2015 | Ferrara, Michele |

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 15 17 3991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SCHMID MORITZ ET AL: "Real-timerange image preprocessing on FPGAs", 2013 INTERNATIONAL CONFERENCE ON RECONFIGURABLE COMPUTING AND FPGAS (RECONFIG), IEEE, 9. Dezember 2013 (2013-12-09), Seiten 1-8, XP032562622, DOI: 10.1109/RECONFIG.2013.6732325 [gefunden am 2014-02-04] * Equation (1); Absätze [0002] - [0003] * ----- | 1-11 | |
| A | C. TOMASI ET AL: "Bilateral filtering for gray and color images", SIXTH INTERNATIONAL CONFERENCE ON COMPUTER VISION (IEEE CAT. NO.98CH36271), 1. Januar 1998 (1998-01-01), Seiten 839-846, XP055166574, DOI: 10.1109/ICCV.1998.710815 * Absatz [0002] - Absatz [0003] * ----- | 1-11 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 16. November 2015 | Ferrara, Michele |

EPO FORM 1503 03.82 (P04C03)

EP 2 966 474 A1

**ANHANG ZUM EUROPÄISCHEN RECHERCHENBERICHT
ÜBER DIE EUROPÄISCHE PATENTANMELDUNG NR.**

EP 15 17 3991

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-11-2015

| Im Recherchenbericht angeführtes Patentdokument | Datum der Veröffentlichung | Mitglied(er) der Patentfamilie | Datum der Veröffentlichung |
|---|---|---|---|
| US 2009048705 A1 | 19-02-2009 | AT 433562 T<br>DK 2026033 T3<br>EP 2026033 A1<br>ES 2326926 T3<br>US 2009048705 A1 | 15-06-2009<br>14-09-2009<br>18-02-2009<br>21-10-2009<br>19-02-2009 |
| US 2007237382 A1 | 11-10-2007 | DE 102006017337 A1<br>DE 202006020599 U1<br>EP 1845336 A1<br>US 2007237382 A1 | 18-10-2007<br>05-03-2009<br>17-10-2007<br>11-10-2007 |

EPO FORM P0461

Für nähere Einzelheiten zu diesem Anhang : siehe Amtsblatt des Europäischen Patentamts, Nr.12/82

13